# EUROPEAN PATENT SPECIFICATION

(11) **EP 2 772 021 B1**
(45) Date of publication and mention of the grant of the patent: **07.09.2016**
(21) Application number: 13735761.2
(22) Date of filing: 09.01.2013
(51) Int. Cl.: H04L 12/26, H04L 29/06, H04L 12/851, H04L 12/801, H04L 12/891

(54) **NETWORK SELF-PROTECTION**
NETZWERKSELBSTSCHUTZ
AUTOPROTECTION D'UN RÉSEAU

(30) Priority: 11.01.2012 US 201261585337 P; 08.01.2013 US 201313736146
(43) Date of publication of application: 03.09.2014
(73) Proprietor: NEC CORPORATION, Tokyo 108-8001 (JP)
(72) Inventor: LUMEZANU, Cristian, East Windsor, New Jersey 08520 (US); JIANG, Guofei, Princeton, New Jersey 08540 (US); ZHANG, Yueping, Princeton, New Jersey 08540 (US); SINGH, Vishal, Princeton, New Jersey 08540 (US); WANG, Ye, Princeton, New Jersey 08540 (US)
(74) Representative: Betten & Resch
(86) International application number: PCT/US2013/020765
(87) International publication number: WO 2013/106386

(56) References cited:
- EP-A1- 2 254 286
- WO-A1-2011/132568
- US-A1- 2002 035 628
- US-A1- 2003 105 976
- US-A1- 2006 075 093
- US-A1- 2006 285 495
- US-A1- 2009 086 651
- US-A1- 2009 168 645
- US-A1- 2011 261 825

## Description

### BACKGROUND OF THE INVENTION

The present invention relates to a network and, more particularly, to a self-protected network.

Modem data center networks are constructed with advanced infrastructures and well-engineered protocols and are operated with extreme cautions. However, the fierce challenge of network failures is still unchanged, if not intensified, especially as an ever growing population of applications and services enter the era of Cloud. Amazon EC2, for instance, was largely down on April 21, 2011 due to a routing misconfiguration that mistakenly rerouted high-volume external traffic into the low-capacity internal network [3]. As a consequence, thousands of businesses and websites were out of service and seventy-five million PlayStation gamers were affected [5]. Another recent example is the three-day blackout of Blackberry in October 2011 as a result of a core switch failure.

To mitigate these problems, a surge of recent efforts are currently underway and have demonstrated encouraging results. One school of people approach the problem by designing next-generation network infrastructures that can improve network bisection bandwidth and provide malleability in the network routing topology [5, 6, 8]. Another group of researchers focus on designing network transport protocol [1, 9] that is particularly fine tuned for data center networks. A last bunch of people seek to propose improved resource placement [2, 7] schemes that can optimize the network resource allocation. At the same time, however, we believe that the cascading catastrophic network failures are unlikely to be prevented without proper considerations of two fundamental assumptions that do not hold in data centers.

We design NetFuse, which is, analogously to the fuse boxes in the electrical circuits, a self-protection mechanism that seeks to detect and respond to a variety of network problems and protect the necessary network services. Specifically, NetFuse employs a multi-dimensional flow aggregation algorithm that automatically determines an optimal set of clustering criteria and identifies the suspicious flows that are likely to cause network problems under these criteria.

Then, NetFuse adaptively regulates the identified flows according to the network feedback. Due to the light-weight sensing capabilities inherent in the OpenFlow technologies, NetFuse is currently implemented in OpenFlow networks as a proxy device between the switches and the controller. This way, NetFuse can not only intercept the control messages and infer the network states, but also offload the excessive processing overhead for the controller, thereby improving scalability of the entire system.
[1] M. Alizadeh, A. Greenberg, D. A. Maltz, J. Padhye, P. Patel, B. Prabhakar, S. Sengupta, and M. Sridharan, "Data Center TCP (DCTCP)," in Proc. ACM SIGCOMM, Aug. 2010.
[2] H. Ballani, P. Costa, T. Karagiannis, and A. Rowstron, "Towards Predictable Datacenter Networks," in Proc. ACM SIGCOMM, Aug. 2011.
[3] Why Amazon's cloud Titanic went down. [Online]. Available: http://money.cnn.com/2011/04/22/technology/amazon_ec2_cloud_outage/index.htm.
[4] G. Cormode, S. Muthukrishnan, and D. Srivastava, "Finding hierarchical heavy hitters in data streams," in Proc. In Proc. of VLDB, 2003, pp. 464-475.
[5] A. Greenberg, J. R. Hamilton, N. Jain, S. Kandula, C. Kim, P. Lahiri, D. A. Maltz, P. Patel, and S. Sengupta, "VL2: a Scalable and Flexible Data Center Network," in Proc. ACM SIGCOMM, Aug. 2009.
[6] C. Guo, G. Lu, D. Li, H.Wu, X. Zhang, Y. Shi, C. Tian, Y. Zhang, and S. Lu, "BCube: a High Performance, Server-Centric Network Architecture for Modular Data Centers," in Proc. ACM SIGCOMM, Aug. 2009.
[7] C. Guo, G. Lu, H. J. Wang, S. Yang, C. Kong, P. Sun, W. Wu, and Y. Zhang, "SecondNet: A Data Center Network Virtualization Architecture with Bandwidth Guarantees," in Proc. ACM CoNEXT, Nov. 2010.
[8] R. N. Mysore, A. Pamboris, N. Farrington, N. Huang, P. Miri, S. Radhakrishnan, V. Subramanya, and A. Vahdat, "PortLand: a Scalable Fault-Tolerant Layer 2 Data Center Network Fabric," in Proc. ACM SIGCOMM, Aug. 2009.
[9] V. Vasudevan, A. Phanishayee, H. Shah, E. Krevat, D. G. Anderson, G. R. Ganger, G. A. Gibson, and B. Mueller, "Safe and Effective Fine-Grained TCP Retransmissions for Datacenter Communication," in Proc. ACM SIGCOMM, Aug. 2009.
[10] C. Wilson, H. Ballani, T. Karagiannis, and A. Rowstron, "Better Never than Late: Meeting Deadlines in Datacenter Networks," in Proc. ACM SIGCOMM, Aug. 2011.
[11] A. Wundsam, D. Levin, S. Seetharaman, and A. Feldmann, "OFRewind: Enabling Record and Replay Troubleshooting for Networks," in Proc. USENIX Annual Technical Conference, Jun. 2011.
[12] Y. Zhang, S. Singh, S. Sen, N. Duffield, and C. Lund, "Online identification of hierarchical heavy hitters: algorithms, evaluation, and applications," in Proc. Proceedings of the 4th ACM SIGCOMM conference on Internet measurement, ser. IMC '04.

The document US 2006/285495 A1 describes a method of aggregating network traffic flows for network traffic elements is described. The traffic elements are characterized by a plurality of characteristics having respective values, where a flow profile is formed by classifying each element into one of a plurality of flows dependent on its characteristic value. The method comprises the steps of obtaining an instantaneous flow profile and aggregating flows from the flow profile having a common value for a characteristic.

### BRIEF SUMMARY OF THE INVENTION

NetFuse leverages the powerful network sensing capabilities of OpenFlow's unique messaging mechanism. As a standalone product, NetFuse can proactively protect the network infrastructure from hard-to-find problems and prevent failure propagation. This is very important for Cloud service providers or data center operators and can rescue the network from disastrous network downtime and service disruption. NetFuse is also a value added services that can be built over OpenFlow switches and therefore are expected to boost the sales and marketing of OpenFlow devices.

An objective of the present invention is to detect, or react to, a network problem such as network overload. **The invention is defined in independent claims 1 and 10.**

An aspect of the present invention includes a device used in a network, comprising a network monitor to monitor a network state and to collect statistics for flows going through the network, a flow aggregation unit to aggregate flows into clusters and identify flows that can cause a network problem, and an adaptive control unit to adaptively regulate the identified flow according to network feedback.

Another aspect of the present invention includes a method used in a network, comprising monitoring a network state and to collect statistics for flows going through the network, aggregating flows into clusters and identify flows that can cause a network problem, and adaptively regulating the identified flow according to network feedback.

### BRIEF DESCRIPTION OF THE DRAWINGS

FIG. 1 depicts a system architecture.
FIG. 2 depicts a flow chart related to the system architecture.
FIG. 3 depicts an example reasonable flow aggregations.
FIG. 4 depicts a flowing diagram that illustrates Procedure 1.2.

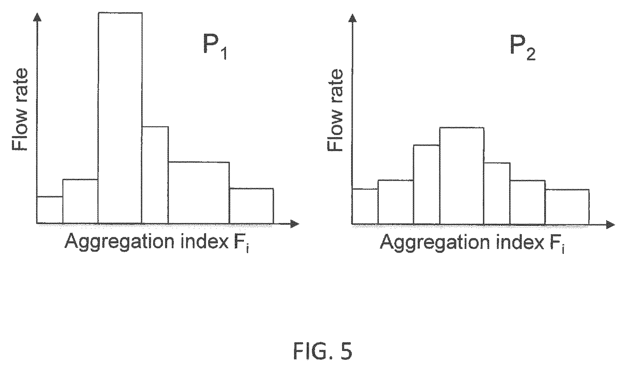

FIG. 5 depicts an example of different flow aggregations.

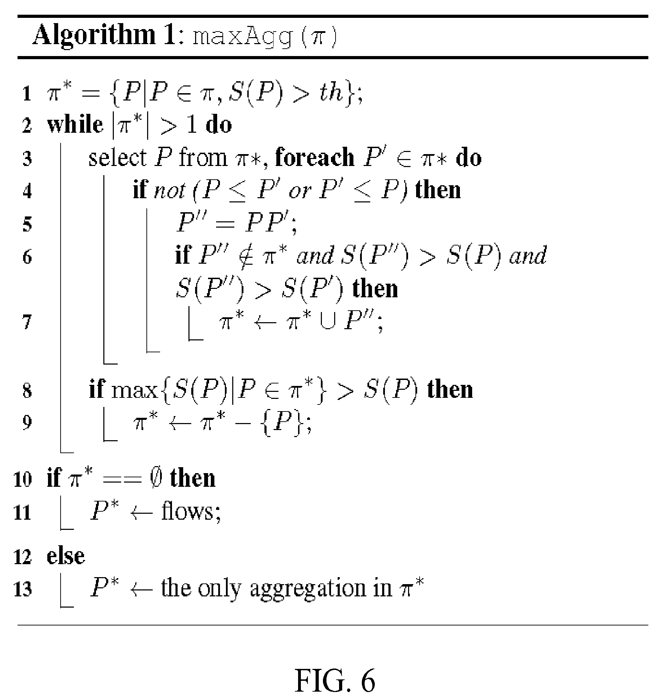

FIG. 6 depicts Algorithm 1.

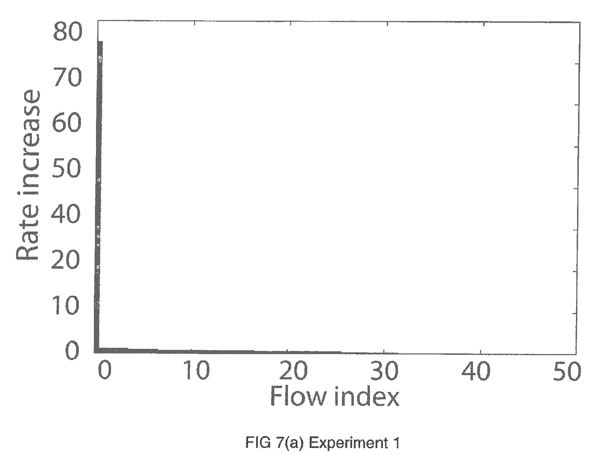

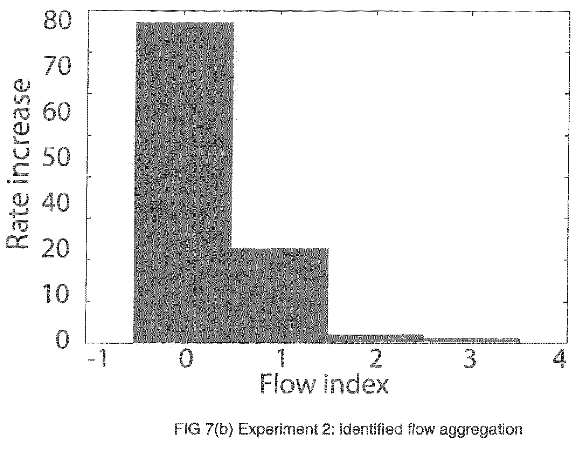

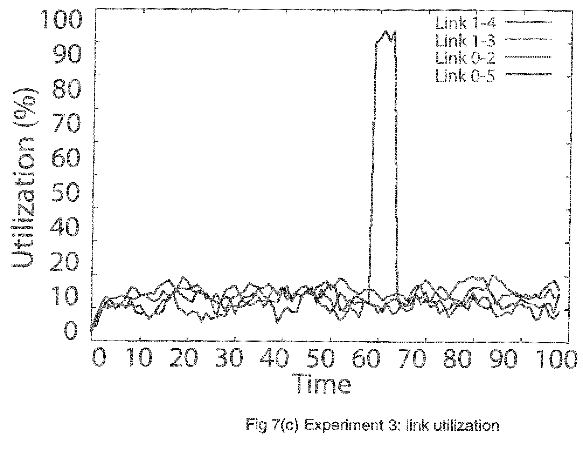

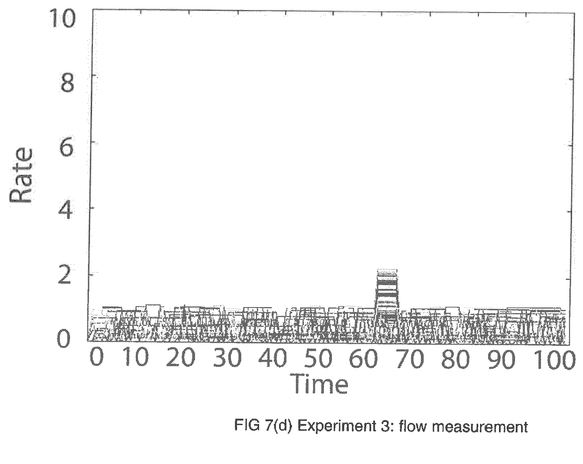

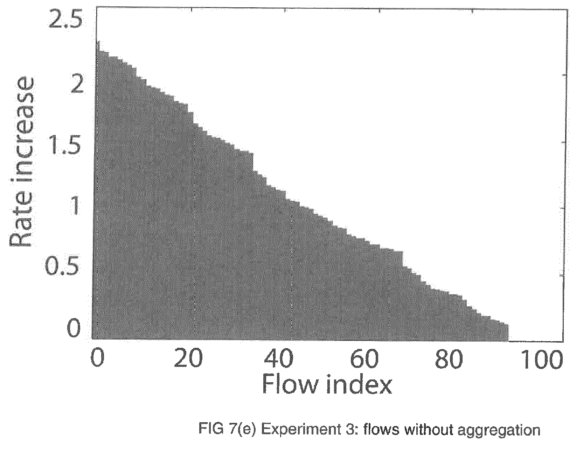

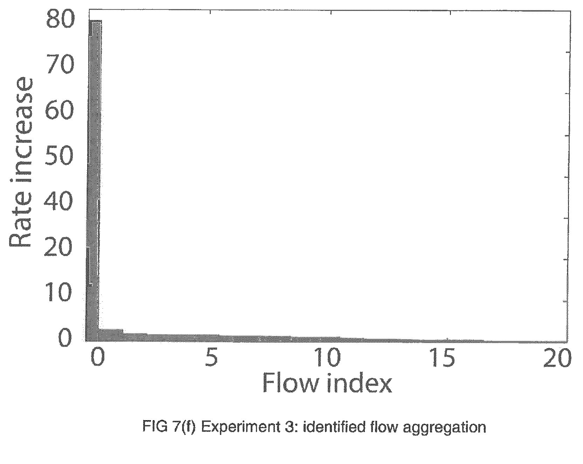

FIG. 7 depicts preliminary experiment results.

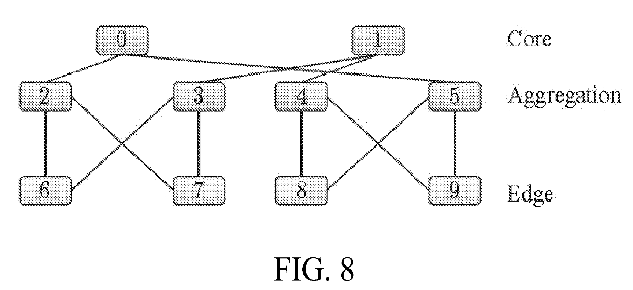

FIG. 8 depicts FatTree network topology.

### DETAILED DESCRIPTION

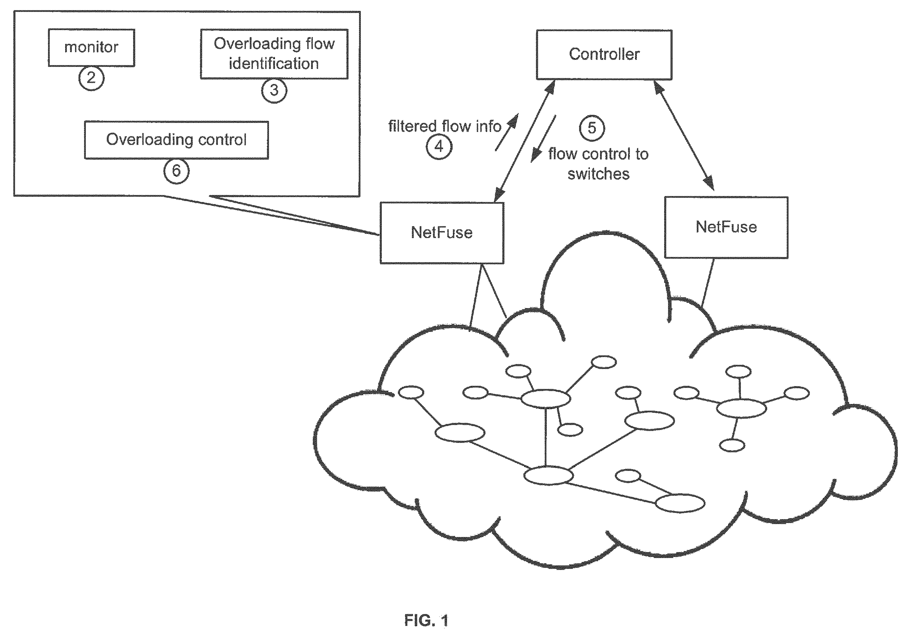

As illustrated in Fig. 1, NetFuse comprises three major components: network monitor, flow aggregation, and adaptive control. First, NetFuse continuously monitors the network states and collect statistics for flows going through the network. Then, during flow aggregation, NetFuse identifies the suspicious flows that are likely to cause network problems. Finally, NetFuse adaptively regulates the identified flows according to the network feedback.

Leveraging the light-weight sensing capabilities inherent in the OpenFlow technologies, NetFuse is currently implemented in OpenFlow networks as a proxy device between the switches and the controller. But NetFuse is not limited to OpenFlow and can be applied to general network systems if monitoring data are available.

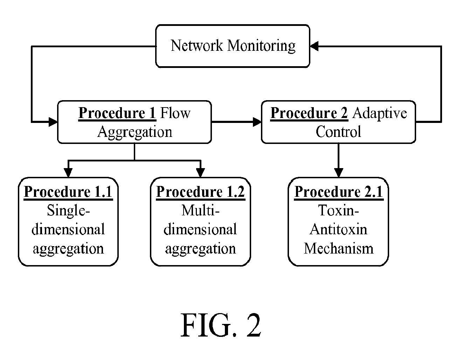

The above system architecture can be mapped to the flow chart in Fig. 2.

### Procedure 1: Flow Aggregation

This procedure seeks to aggregate flows into clusters and find the cluster that is most likely to be responsible for certain network problems. In the input of this procedure is flow statistics and the output is clusters of suspicious flows. Procedure 1.1 and 1.2 are specific solutions that accomplish this goal.

### Procedure 1.1: Single-Dimensional Aggregation

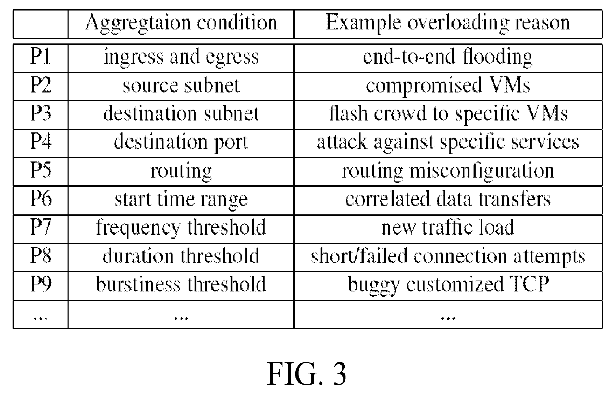

First, define a score *S*(*P*) to measure the significance of the overloading flows: *S*(*P*) = (*max(F)-m⁻*(*F*))/*m⁻*(*F*), where *m⁻* is the low median operator. Then, the goal is to find the aggregation that best reveals the overloading behavior, *i.e., P** = max*_{P} S*(*P*). Next, select or define the aggregations that reveal overloading behavior, based on best practice or operator specifications for the aggregation rules. Fig. 3 is an example set of aggregation rules.

For aggregation rules that require a threshold value, we define the value according to different applications. There are many ways to determine this.

After all the above information is available, the algorithm simply chooses one aggregation rules, clusters flows based on this rule, and outputs the set of flows with the highest score or the score exceeding the predetermined threshold values.

### Procedure 1.2: Multi-Dimensional Aggregation

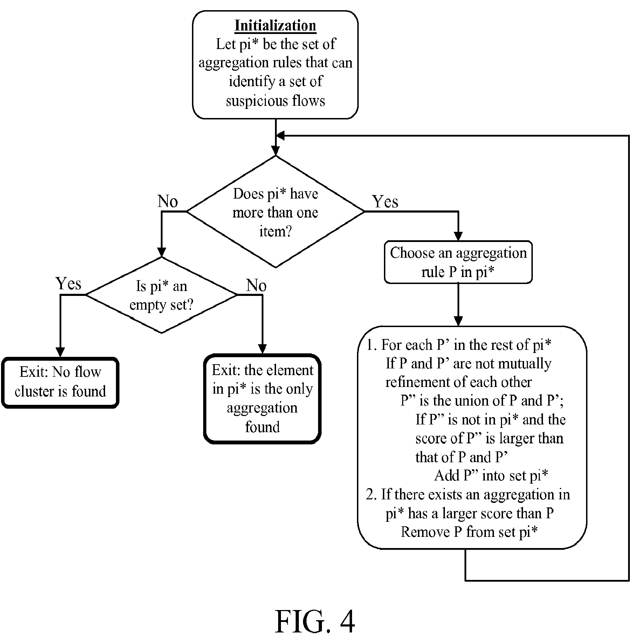

In practice, the overloading can be caused by specific applications at specific network regions, corresponding to a combination of multiple aggregation conditions on different flow properties. This procedure correlate multiple aggregation rules and identify the combination of rules that most evidently real the network problems. As illustrated in Fig. 4, this procedure is essentially a breadth-first search algorithm with branch pruning to enumerate the multi-dimensional flow.

### Procedure 2: Adaptive Control

This procedure applies adaptive control on flows generated in Procedure 1. Procedure 2.1 is one way to realize this adaptive control.

### Procedure 2.1: Toxin-Antitoxin Control

When NetFuse apply extra delays to an overloading flow f's RTT (round-trip delay time), NetFuse tests the aggressiveness of f's response. If f reduces its rate, the extra delay will also be reduced, and eventually it will no longer suffer extra delay but enjoy the original data path; otherwise, the extra delay increases and eventually fills the buffer, dropping all packets of f. If the target rate of f is r, while f's current rate demand (measured at NetFuse box buffer queue) is r_{f}, the extra delay NetFuse put on f is: (r_{f} - r)×r_{f}×RTT/r. Assuming the flows employ TCP (Transmission Control Protocol) and thus the flow rate is inversely proportional to RTT, since r_{f} ∼ RTT, the extra delay on f intends to reduce flow rate from r_{f} to r. In practice, well-behaving flows respond to the extra delay by lowering the rate to or under r, and thus it will see no more extra delay at NetFuse; ill-behaving flows may continue take higher rate than they should, and NetFuse will continue delaying their packets, with possible mandatory drops.

The foregoing is to be understood as being in every respect illustrative and exemplary, but not restrictive, and the scope of the invention disclosed herein is not to be determined from the Detailed Description, but rather from the claims as interpreted according to the full breadth permitted by the patent laws. It is to be understood that the embodiments shown and described herein are only illustrative of the principles of the present invention and that those skilled in the art may implement various modifications without departing from the scope and spirit of the invention.

### Further System Details

Although constructed with redundant network topologies and well-engineered protocols, modem cloud and data center platforms still suffer catastrophic failures and performance degradations from large traffic surges caused by both external (*e.g*., DDoS attacks) or internal (*e.g*., workload changes, operator terrors, routing misconfigurations) factors If not mitigated, traffic overload could haw significant financial and availability implications for cloud providers.

We propose NetFuse, a mechanism to protect against traffic overload in OpenFlow-based data center networks. NetFuse is scalable because it uses passively-collected OpenFlow control messages to detect active network flows; it is accurate because it uses multi-dimensional flow aggregation to determine the right criteria to combine network flows that lead to overloading behavior; and it is effective in limiting the damage of surges while not affecting the normal traffic because it uses a toxin-antitoxin-like mechanism to adaptively shape the rate of the flow based on application feedback. We built a prototype of NetFuse and evaluated it on a real OpenFlow testbed. Our results show that the mechanism is effective in identifying and isolating misbehaving traffic with a small false positive rate (< 9%).

### 1 Introduction

Modern cloud and data center platforms comprise thousands of servers running complex applications, whose inter-actions with each other and with the infrastructure are not always known. Although constructed with redundant network topologies [5] and well-engineered protocols [1], these platforms still suffer catastrophic failures and performance degradations when traffic overload occurs. Traffic overload is caused external factors, such as DDoS attacks but also by seemingly harmless internal factors, such as small workload changes, simple operator tasks, or routing misconfigurations. For example, Ama on 2 was down in April 211 due to a routing misconfiguration that mistakenly rerouted high-volume external traffic into the low-capacity internal network [3].

If not mitigated, traffic overload could have severe financial or availability implications. A recent study on 41 US-based data centers shows that every minute of outage costs the providers on the average $5,600. Anecdotal evidence suggests that the EC2 outage cost Amazon around $2 million in revenue loss. As more and more services and applications migrate to the cloud, it is crucial that we effectively palliate the effects of traffic overload.

There is a large amount of research focused on identifying and mitigating network problems caused by an overabundance of traffic, falling into two broad categories: proactive and reactive. Reactive solutions propose to modify data center architecture, protocols, resource placement, or applications to limit the occurrence of failures [1, 2, 7, 9,10]. However, they cannot easily cope with cascading failures caused by unpredictable interactions between applications or with the infrastructure, as manifested in the Amazon incident. Proactive solutions focus on how to manage the network and quickly detect faults after they occur. These approaches most constantly monitor network traffic and application behavior and may not scale when the price to gather measurements is high.

We explore a mechanism that exploits the capabilities of OpenFlow switches to prevent
data center *network overloading problems*. OpenFlow is increasingly deployed in data centers to support diverse performance- or reliability-based application requirements. In OpenFlow networks, switches are connected to a logically centrali ed controller and notify it, using control messages, when new flows arrive or expire.

We propose NetFuse, a mechanism to protect against*cascading* network overloading with *little measurement overhead* NetFuse sits between the switches and controller of an OpenFlow network and guards the network against the effects of traffic overload, similarly to how fuse boxes protect electrical circuits from surges.

NetFuse works in three steps. First, it uses OpenFlow control messages (*e.g*., Packetln, FlowMod, FlowRemoved) to *detect the set of active network flows.* Relying on control tragic, which notifies the controller of network events, such as flow departures and arrivals, eliminates the need for on-demand, expensive monitoring. Second, we employ a multi-dimensional flow aggregation algorithm that automatically determines an optimal set of clustering for the active flows (*e.g.,* based on VLAN, application, path, rate) and *identifies suspicious flows* for each criteria. Finally, NetFuse limits the effect of these flows by adaptively changing their rate according to application feedback.

We implement NetFuse and deploy it in a real OpenFlow network as a proxy between the switches and the controller. Preliminary experiments show that NetFuse can successfully detect network overloading caused by routing misconfigurations or DDos attacks with small false positive rates (less than 9%).

### 2 Flow Aggregation

The first goal of NetFuse, is to identify the flows with suspicious behavior. The definition of "suspicious," varies according to different contexts. For example, both excessively frequent DNS queries and extremely high traffic volume represent overloading behavior. In practice, network operators may need to specify overloading behaviors based on the operational experience and domain knowledge. Because no single flow may be suspicious, NetFuse performs flow aggregation to identify clusters of active flows with overloading behavior.

### 2.1 Single-Dimensional Aggregation

General problem. We start by formulating the general flow aggregation problem. The input is a set of *n* flows: {*f₁*, *f₂*,...*fₙ*}. Each valid flow aggregation can be modeled as a *set partition P* (*e.g., P* = {*F*₁ = {*f*₁, *f*_{3,} *f*₅}, F₂ = {*f*₂*, fₙ*}*,..., fₖ*}). Our goal is to find the aggregations that exhibit overloading.

To capture the overloading behavior of an aggregation, we define its overloading score *S*(*P*) *S*(*P*) = (max{*F*} - m⁻{*F*})/*m*⁻{*F*}, where *max* is the maximum rate across all aggregated flows in the aggregation and *m*⁻ is the low median. Different aggregations have different scores, as in some aggregations the overloading behavior shows more evidently than others. For example, in Figure 1, aggregation *P*₁ has a higher score than *P*₂ due to the sharpness of its peaks. The aggregation that best reveals overloading behavior is given by *i.e*., *P** = max*_{P} S*(*P*)*.*

Flow aggregation is a combinatorial optimization problem and NP-hard. Machine learning based clustering algorithms may be applied, but they require heavy training data and complex computation, making it unsuitable for online problem detection. In fact, it may not even be necessary to solve this general flow aggregation problem, because an arbitrary flow clustering may not be mapped to a practical overloading reason and thus a practical solution cannot be found. Even worse, it is also possible that a group of perfectly legitimate flows are labeled problematic only because they collectively show certain *statistical* overloading behavior.

**Reasonable aggregations** Instead of traversing arbitrary flow aggregations, we design NetFuse to enumerate a list of *reasonable* aggregations and find the one that best explains the observed overloading phenomenon. A reasonable aggregation corresponds to one or more *practical overloading reasons*. Table 1 exemplifies a list of reasonable flow aggregations and the corresponding overloading reasons. For example, *P*₄ aggregates the flows with the same destination port number together. If the overloading is caused by attacks against HTTP, the aggregated flow with "dPort = 80" takes significantly more resource than other flows. If NetFuse identifies this flow aggregation, any HTTP request traffic (including the upcoming ones) will be controlled, and the other applications in the network will be protected. Note that this list of rules includes both spatial (*P*1 to *P*6) and temporal (*P*7 to *P*9) flow properties, and we can easily obtain the required information in OpenFlow (more on this in Section 4). However, it by no means covers all possible aggregation conditions and can be customized by the operators based on the domain knowledge.

**Threshold-based aggregation** Some reasonable aggregation rules may be based on a predefined threshold, *e.g., P7, P8,* and *P*9. Using *P*8 from Table 1 as an example, if we want to partition flows by duration d*_{f},* we can set the threshold value *dₜₕ*, and aggregates the flows, with shorter duration (*d_{f}* < *dₜₕ*) into the "short-lived" aggregation and the other flows into the "long-lived". We find an appropriate threshold by choosing the value that separates the aggregated flows by the largest distances. The distance definition can be determined given the historical measurement statistics during normal (and heavy-load) operations. For example, if the flow duration follows a power law distribution, we define the distance between threshold *dₜₕ* and aggregated flows *F* as: min_{*f*∈*F*}(log(*dₜₕ*) - log(*d_{f}*)). Then we sort the flows in *F* by log(*d*_{f}), find *i** = arg maxᵢ (log *f*_{*i*+1}- log *fᵢ*), and set exp ((log *f*_{*i**+1} + log *f*_{*i**})/2) as the threshold. For different flow properties, we use different techniques (*e.g*., clustering algorithms) to determine the threshold for the aggregation condition.

### 2.2 Multi-Dimensional Aggregation

In Table 1, each aggregation is based on a single flow property. In practice, the overloading can be caused by specific applications at specific network regions, corresponding to a combination of multiple aggregation conditions on different flow properties. For example, if the overloading is caused by concurrent attacks against database, then the corresponding aggregation may be "start time < 30 seconds" and "dPort = 1433". If we aggregate the flows by either start time or dPort, we cannot identify the right set of flows. Thus, a key problem is how to find the correct rule combination.

We develop a breadth-first search algorithm with branch pruning to enumerate the multi-dimensional flow aggregations (Algorithm 1). The input of the algorithm is π = {*P*₁, *P*₂, *P*₃, ...}, which includes the list of reasonable aggregations to be tried out. As an example, suppose *P*₁ = {{*f*₁, *f*₂},{*f*₃}} is a flow aggregation based on start time, in which *f*₁*, f*₂ are "old" flows and *f*₃ is a "new" flow; *P*₂ = {{*f*₁}, {*f*₂,*f*₃}} is another flow aggregation based on dPort, in which *f*₁ is a flow to port 22 and *f*₂, *f*₃ are flows to port 80. The algorithm generates a new aggregation *P*₃ by combining *P*₁ and *P*₂ together: *P*₃ = {{*f*₁},{*f*₂}, {*f*₃}}, in which *f*₁ is an old flow to port 22, *f*₂ is an old flow to port 80, and *f*₃ is a new flow to port 80. If such a new aggregations *P*₃ has higher score *S*(*P₃*) than *P*₁ and *P*₂, then the algorithm considers *P*₃ better and keeps it in π. The algorithm continues to combine partitions to find the best flow aggregation. Note the "≤" operation represents the *refinement* relation between two set partitions. The algorithm does not combine the two aggregations if one is a refinement of the other.

The computational complexity of Algorithm 1 is *O*(*NK^{m}*)*,* where *N* is the number of active flows, *K* is the number of pre-determined aggregation rules, and m is the dimension of the optimal aggregation. In practical settings, this algorithm can finish in under one second, which is comparably to controller response time and sufficiently responsive for online detection and reaction. NetFuse, applies this algorithm to find the best reasonable flow aggregation and the corresponding most likely overloading reason. If no aggregation shows the overloading problem clearly, the output of the algorithm may be just the flows without aggregation (this can also be viewed as the finest aggregation). Otherwise, the output of the algorithm may be either single or multi-dimensional flow aggregation rule(s). NetFuse will classify all flows falling into the aggregation as overloading.

### 3 Adaptive Control

### 3.1 Basic Control

Once NetFuse finds the suspicious flows, it can control them to mitigate the overloading problems. For each identified overloading flows, NetFuse instructs the associated switches to reroute the flows to the NetFuse box. Rerouting, different from mirroring, frees the network resource originally occupied by the overloading flows. Then, NetFuse can delay or selectively drop packets of the redirected flows in an internal buffer queue such that their flow rates are mandatorily reduced. In Section 4, we discuss how to realize this functionality in an OpenFlow network.

### 3.2 Toxin-Antitoxin Mechanism

The identified suspicious flows may not be treated equally. Due to potential false alarms, not all suspicious flows may be misbehaving. Even if abnormal flows are correctly found, different flows may have different impacts on the aggregate overloading behavior. In addition, traffic interdependencies may exist within the identified flows or between them and the other normal flows. Therefore, NetFuse can regulate the identified flows differently and adapt the reaction according to the system feedback.

We introduce an adaptive control mechanism, inspired by toxin-antitoxin biological systems. During the cell division, reproducible poison and a limited amount of antidote are both released; the ill-behaved child cells kill themselves by aggressive reproduction (together with the poison), while the well-behaved child cells control themselves and survive with the sufficient antidote. A similar mechanism was used to control high bandwidth aggregate flows in the Internet.

NetFuse applies the toxin-antitoxin mechanism in its control actions as follows. When it delays an overloading flow *f*, NetFuse tests the aggressiveness of *f*'s response. If *f* reduces its rate, NetFuse also reduces the aggressiveness of the delay until it no longer delays *f*. Otherwise, NetFuse starts delaying *f* more aggressively until it eventually fills the buffer, dropping all packets of *f*. In particular, for NetFuse control, if the target rate of *f* is *r* (e*.g.*, the average rate of other normal flows), and *f*'*s* current rate demand (measured at NetFuse box buffer queue) is *r_{f},* the extra delay NetFuse puts on *f* is: (*r_{f}* - *r*) × *r_{f}* × RTT/*r*. Assuming the flows employ TCP and thus the flow rate is inversely proportional to RTT, since *r_{f}* α *RTT*, the extra delay on *f* intends to reduce flow rate from *r_{f}* to *r*. In practice, well-behaving flows respond to the extra delay by lowering the rate to or under *r*, and thus it will see no more extra delay at NetFuse; ill-behaving flows may continue take higher rate than they should, and NetFuse will continue delaying their packets, with possible mandatory drops.

### 4 NetFuse Design

In this section, we realize flow aggregation and adaptive control mechanisms in OpenFlow-based networks. Specifically, we implement NetFuse as a proxy device between the OpenFlow switches and the controller, similarly to OFRewind [11], a network record and replay mechanism for OpenFlow networks. Unlike OFRewind, but we utilize more intensively OpenFlow's light-weight *sensing* capabilities and flexible routing functionalities, both of which facilitate the design and implementation of NetFuse.

**Monitoring** NetFuse employs both *passive listening* and *active query* to collect necessary network information. As an intermediate relay. NetFuse intercepts all the control messages between the OpenFlow switches and controller, thereby obtaining a global view of the information and statistics of all flows in the network.

Each switch sends a Packetln message to the controller every time it receives a data packet that does not match any of its flow table entries. The controller replies with an FlowMod message to install a forwarding rule for the packet and the subsequent packets in the same flow. Both Packetln and FlowMod messages encode key flow information: identifier (*e.g*., source IP and port, destination IP and port), routing configuration (*e.g*., VLAN tag, ingress interface, egress interface), and the flow start time. When the flow entry expires (triggered by a configurable timer encoded in the **FlowMod**), the switch sends to the controller a **FlowRemoved** message, which includes the expired flow's duration and volume. All these control messages are embedded in the normal operation of OpenFlow networks and thus can be efficiently utilized by NetFuse with little additional overhead.

In addition to passively listening to the control messages, NetFuse can also use the OpenFlow **ReadState** messages to periodically query the switches for network resource utilization and fine-grained flow information. The network utilization information includes the interface load and queue size. NetFuse also actively queries fine-grained information about the long-lived elephant flows, in particular the dynamic flow rates between the flow start time and the expire time. Inevitably, these active queries introduce overhead to the data path. To mitigate this problem. NetFuse sets the query frequency to be in proportion to the current network load. In addition, NetFuse, conducts more active queries only for suspected flows and in suspected network regions.

**Detection and action** Given the set of flows derived from control traffic monitoring, NetFhse applies the flow aggregation algorithm to identify the flows with overloading behavior. During normal operation, all the flow reports from the switches are replayed to the controller. In overloading situations, especially when the control network is heavily loaded, NetFuse filters and prioritizes the flow reports to offload to the controller. The control commands from the controller also go through NetFuse, before getting installed in switches. When it detects network problems and identifies the responsible flows, NetFuse performs adaptive control on the identified flows by modifying or issuing new flow control rules to the switches. In cases where the deep packet inspection is required or when extra delays need to be injected into certain flows (as described in Section 3.1), the identified flows are redirected to the NetFuse boxes for further processing.

The NetFuse boxes work as transparent devices between the controller and switches. From the perspective of switches, these devices act as the controller and issue actual commands to the switches to perform certain tasks. From the perspective of the controller, they are the network. Additionally, the NetFuse proxies also relieve the controller from heavy tasks such as flow redirection, delay injection, and packet blocking, thereby improve the scalability of the entire system.

### 5 Preliminary Experiments

We built a NetFuse prototype in our data center testbed and evaluate our design using simulations driven by the network traces collected on our testbed hosting several multi-tier applications. As seen in Figure 3, we create a FatTree network with 10 switches and generate more than 500 random flows on this network over 100 time slots.

NetFuse applies the flow aggregation algorithm to the monitored flows at each time slot. When a network link is overutilized, NetFuse identifies the overloading flows based on the best flow aggregation rules. In the following reported results, we create multiple test cases with specific overloading flows injected in the network and examine whether NetFuse can correctly capture these overloading flows. We configured a few reasonable aggregation rules (as in Table 1) for bootstrap, and we applied the simple algorithm to determine the threshold for each corresponding rule (see Section 2).
**Experiment 1: single compromised flow** We start with the simplest case, in which we pick up one normal flow, and suddenly increase its rate at some time slot. Figure 2(a) shows that the suspicious flow uses more resources than the other flows and can be easily identified, even without aggregation.
**Experiment 2: DDoS attack** We simulate a DDoS attack by injecting flows from different switches to switch 9. Figure 2(b) shows the identified overloading aggregated flow obtained from combing the rules "frequency < 4" and "start time < 30 seconds". This aggregated flow includes all the DDoS attack flows but also mis-identifies normal new flows that start at the same time as the attack. The rate of false alarm is 9%. The adaptive NetFuse reaction will eventually block the real bad attacking traffic and let the normal flows pass.
**Experiment 3: routing misconfiguration** We introduce a routing misconfiguration and let around 50 new flows routed from switch 1 to switch 4 and eventually to switch 8. Although none of the new flows has very high rate, the total load of all the rerouted traffic can overload some network links. Figure 2(c) shows the sampled network utilization, in which link 1-4 is overloaded.

Given the rate of each flow (Figure 2(d)), NetFuse may need to identify the new flows that are causing the overload. Let's consider first the flows that go through link 1-4 (Figure 2(e)) without any aggregation. It is very difficult to identify which flows are having overloading behavior. Once we perform aggregation on these flows by combining frequency and routing as aggregation rules, the detection becomes much easier. Figure 2(f)) shows the rate increase for flows aggregate by combining the criteria "frequency < 4" and "routing from switch 1 to switch 4 to switch 8," which exactly correspond to the rerouted new traffic.

### 6 Discussion and related work

### Monitoring

Recent wok proposes a framework to detect large tra}403c aggregates an commodity switches. Their system relies actively reading state from switches and adapts monitoring rules to measure the flows that are likely heavy hitters.
In contrast, NetFuse relies mostly on passive control traffic and uses active querying only when control traffic is insufficient. In addition, NetFuse can attempts to limit the effects of surges. NetFuse, may rely largely on passive measurements.

**Flow aggregation** We use multi-dimensional aggregation to find the problematic flow. This is to the hierarchical heavy hitter (HHH) problems [4,12] in traditional IP networks. However, the proposed algorithms may not be directly applied to data center networks since the natural IP address hierarchy may not always exist, especially is such topologies with decoupled physical and logical addressing schemes such as VL2 [5] and Portland [8]. Even if the spatial properties of the flow can be hierarchically aggregated, the temporal properties of the flow still do not fit in the HHH algorithms.

Scalability Two mechanisms help scale NetFuse,: network statistics inference based on the OpenFlow control messages and controller offloading using the NetFuse middlebox. The presence of a large number of flows triggers many control packets and can overwhelm NetFuse. Previous measurements show that having a large number of flows is feasible for medium-sized OpenFlow networks with a powerful controller or a collection of controllers. For example, controllers in networks of 100 switches, with new flows arriving every 10*µ*s, may have to process up to 10 million Packetln messages per second. Even if the controller were distributed, NetFuse could still capture control traffic and synchronize network information using a mechanism similar to Flow Visor.

**Deployment** The current NetFuse design assumes a reactive OpenFlow network. In practice, it is most likely that NetFuse boxes are to be deployed to a hybrid network built upon a combination of legacy and OpenFlow switches. In such environments, the current NetFuse, monitoring mechanisms can be coupled with SNMP-based techniques and flow sampling mechanisms. Moreover, in such a hybrid environments, NetFuse boxes will be deployed at a few vantage points instead of ubiquitously in the network. We will have a full treatment of these issues in our future work.

### 7 Conclusion

We presented NetFuse to protect against network overloading problems in OpenFlow data center networks. NetFuse uses (1) passively-collected OpenFlow control traffic to identify active network flows, (2) multi-dimensional flow aggregation to find the flow clusters that are suspicious, and (3) a toxin-antitoxin mechanism to adaptively limit the rate of suspicious flows without severely affecting the false positives. We demonstrated NetFuse, in our lab OpenFlow testbed and showed that it can detect DDoS attacks and routing misconfigurations.

## Claims

1. A device used in a network, the device comprising:
a network
monitor arranged to monitor a network state and to collect
statistics for flows going through the network;
a flow aggregation unit arranged to aggregate flows into clusters and identify flows that can cause a network problem; and
an adaptive control unit arranged to adaptively regulate the identified flow according to network feedback;
and **characterised by** the flow aggregation unit
defines score S(P) = (max(F)-m-(F))/m-(F), where a set partition P = {F₁, F₂, ..., Fₖ}, and m- is a low median operator,
finds aggregation that reveals an overloading behavior P* = maxₚ S(P), and
defines a set of reasonable aggregation rules.

2. The device as in claim 1, wherein the set of aggregation rules are obtained from a past experience or an operator specification.

3. The device as in claim 1 or 2, wherein the set of aggregation rules include at least one of:
ingress or egress for end-to-end flooding,
a source subnet for a compromised virtual machine (VM),
a destination subnet for flash crowd to a specific VM,
a destination port for attack against a specific service,
a list of switches or routers on a path for routing misconfiguration,
a start time range for a correlated data transfer,
a packet arrival frequency threshold for new traffic load,
a duration threshold for a short or failed connection attempt, and
a burstiness threshold for buggy customized Transmission Control Protocol (TCP).

4. The device as in any of claims 1 to 3,
wherein at least one of the aggregation rules requires a threshold, and
wherein the device defines different threshold values according to different applications.

5. The device as in any of claims 1 to 4,
wherein the flow aggregation unit chooses one of the aggregation rules, clusters flows based on said one of the aggregation rules, and outputs the set of flows with a highest score or a score exceeding a predetermined threshold value.

6. The device as in claim 1,
wherein the flow aggregation unit chooses aggregation rule P in pi*, where pi is a set of aggregation rules,
for each P' in the rest of pi , add P", which is a union of P and P', into pi* , in case that P and P' are not mutually refinement of each other and P" is not in pi and a score of P" is larger than a score of P and P', and
removes P from pi in case pi includes an aggregation that has a lager score than P.

7. The device as in any of claims 1 to 6,
wherein the adaptive control unit applies an extra delay to round-trip delay time (RTT) of an overloading flow.

8. The device as in claim 1, wherein the network comprises an OpenFlow network.

9. The device as in claim 8, wherein the device comprises a proxy device disposed between a switch and a controller.

10. A method used in a network, the method comprising:
monitoring a network state and to collect statistics for flows going through the network;
aggregating flows into clusters and identify flows that can cause a network problem; and
adaptively regulating the identified flow according to network feedback;
and **characterised by** the flow aggregation comprises:
defining score S(P) = max (F) -m- (F) - m- (F), where m- is a low median operator;
finding aggregation that reveals an overloading behavior *P** = maxₚ *S*(*P*); and defining a set of aggregation rules.

11. The method as in claim 10, wherein the method is used in a proxy device disposed between a switch and a controller.

## Patentansprüche

1. Eine Vorrichtung, die in einem Netzwerk verwendet wird, wobei die Vorrichtung aufweist:
einen Netzwerkmonitor, der ausgebildet ist, einen Netzwerkstatus zu überwachen und Statistiken für Flüsse, die durch das Netzwerk gehen, zu sammeln;
eine Fluss- Aggregationseinheit, die ausgebildet ist, Flüsse in Cluster zu aggregieren und Flüsse zu identifizieren, die Netzwerkprobleme verursachen können; und
eine adaptive Steuereinheit, die ausgebildet ist, adaptiv den identifizierten Fluss in Übereinstimmung mit Netzwerkfeedback zu regulieren; und **dadurch gekennzeichnet, dass**
die Fluss-Aggregationseinheit den Score S (P) = (max (F) -m - (F)) / m - (F) definiert, wobei eine gesetzte Partition P = {F₁, F₂, ..., Fₖ}, und m- ein niedriger Medianoperator ist, eine Aggregation findet, die ein Überlastverhalten P* = maxₚ S(P) aufdeckt, und
einen Satz von vernünftigen Aggregationsregeln definiert.

2. Die Vorrichtung nach Anspruch 1, wobei der Satz von Aggregationsregeln erhalten wird von einer vergangenen Erfahrung oder einer Operatorspezifikation.

3. Die Vorrichtung nach Anspruch 1 oder 2, wobei der Satz von Aggregationsregeln zumindest eines einschließt von:
Zufluss oder Abfluss von Ende-zu-Ende Flutung,
ein Quellsubnetz für eine kompromittierte virtuelle Maschine (VM) ein Ziel-Subnetz für einen Flashcrowd zu einer spezifischen VM,
einen Zielport für einen Angriff gegen einen spezifischen Service,
eine Liste von Switches oder Routern auf einem Pfad zum Routen einer Fehlkonfiguration,
einen Startzeitbereich für einen korrelierten Datentransfer,
einen Paket-Ankunfts-Frequenzschreibewert für eine neue Traffic-Last,
einen Zeitdauer-Schwellwert für einen kurzen oder fehlgeschlagenen Verbindungsversuch, und
einen Burstiness-Schwellwert für ein Buggy-Customized Transmission Control Protocol (TCP).

4. Die Vorrichtung nach den Ansprüchen 1 bis 3,
wobei zumindest eine der Aggregationsregeln einen Schwellwert erfordert, und
wobei die Vorrichtung unterschiedliche Schwellwerte gemäß unterschiedlichen Anwendungen definiert.

5. Die Vorrichtung nach allen der Ansprüche 1 bis 4 ,
wobei die Fluss-Aggregationseinheit eine der Aggregationsregeln auswählt, Cluster-Flüsse basierend auf der einen der Aggregationsregeln, und den Satz von Flüssen mit dem höchsten Score oder einem Score, der einen vorbestimmten Schwellwert überschreitet, ausgibt.

6. Die Vorrichtung nach Anspruch 1,
wobei die Fluss-Aggregationseinheit eine Aggregationsregel P in pi* auswählt,
wobei pi* ein Satz von Aggregationsregeln ist,
wobei für jedes P' in dem Rest von pi*, P", welches eine Vereinigung von P und P' ist, zu pi*hinzugefügt wird, für den Fall dass P und P' nicht gegenseitige Verfeinerungen voneinander sind und P" nicht in pi* ist und ein Score von P" größer ist als ein Score von P und P', und
entfernen von P von pi* für den Fall, dass pi* eine Aggregation einschließt, die einen höheren Score als P hat.

7. Die Vorrichtung nach einem der Ansprüche 1 bis 6,
wobei die adaptive Steuereinheit eine Extra Verzögerung zu einer Round - Trip - Delay -Time (RTT) eines Überlast - Flusses anwendet.

8. Die Vorrichtung nach Anspruch 1, wobei das Netzwerk ein Openflow-Netzwerk umfasst.

9. Die Vorrichtung nach Anspruch 8, wobei die Vorrichtung eine Proxy-Vorrichtung umfasst, die zwischen einem Switch und einem Controller angeordnet ist.

10. Ein Verfahren, das in einem Netzwerk verwendet wird, wobei das Verfahren aufweist:
Überwachen eines Netzwerkzustandes und sammeln von Statistiken für Flüsse, die durch das Netzwerk hindurch gehen;
Aggregieren von Flüssen in Cluster und identifizieren von Flüssen, die Netzwerkprobleme verursachen können; und
adaptives Regulieren des identifizierten Flusses gemäß Netzwerkfeedback;
und **gekennzeichnet dadurch, dass** die Flussaggregation ausweist;
Definieren eines Score S (P) = max (F) - m - (F) = M - (F), wobei m- ein niedriger Medianoperator ist;
Finden von Aggregation, die ein Überlastverhalten P*= maxₚS(P) aufdeckt; und
Definieren eines Satzes von Aggregationsregeln.

11. Das Verfahren nach Anspruch 10, wobei das Verfahren verwendet wird in einer Proxyvorrichtung, die zwischen einem Switch und einem Controller angeordnet ist.

## Revendications

1. Dispositif utilisé dans un réseau, le dispositif comprenant :
un moniteur de réseau conçu pour surveiller un état de réseau et pour recueillir des statistiques de flux passant par le réseau ;
une unité d'agrégation de flux conçue pour agréger des flux en grappes et identifier des flux qui peuvent provoquer un problème de réseau ; et
une unité de commande adaptative conçue pour réguler de façon adaptative le flux identifié selon une rétroaction de réseau ;
et **caractérisé en ce que** l'unité d'agrégation de flux
définit un résultat S(P) = (max(F)-m-(F))/m-(F), où une partition établie P = {F₁, F₂, ..., Fₖ}, et m- est un opérateur médian faible,
trouve une agrégation qui révèle un comportement de surcharge P* = maxₚ S(P), et
définit un jeu de règles d'agrégation raisonnables.

2. Dispositif selon la revendication 1, dans lequel le jeu de règles d'agrégation est obtenu à partir d'une expérience passée ou d'une spécification opérateur.

3. Dispositif selon la revendication 1 ou 2, dans lequel le jeu de règles d'agrégation comporte au moins l'un parmi :
une entrée ou une sortie pour un trafic de bout-en-bout,
un sous-réseau de source pour une machine virtuelle (VM) compromise,
un sous-réseau de destination pour un pic de charge dans une VM spécifique,
un port de destination pour une attaque contre un service spécifique,
une liste de commutateurs ou de routeurs sur un trajet pour un problème de configuration d'acheminement,
une plage de temps de démarrage pour un transfert de données corrélé,
un seuil de fréquence d'arrivée de paquet pour un nouveau volume de trafic,
un seuil de durée pour une tentative de connexion courte ou échouée, et
un seuil de sporadicité pour un protocole de contrôle de transmission (TCP) personnalisé et erroné.

4. Dispositif selon l'une quelconque des revendications 1 à 3, dans lequel au moins l'une des règles d'agrégation requiert un seuil, et dans lequel le dispositif définit des valeurs de seuil différentes selon des applications différentes.

5. Dispositif selon l'une quelconque des revendications 1 à 4, dans lequel l'unité d'agrégation de flux choisit l'une des règles d'agrégation, met en grappe des flux d'après ladite règle des règles d'agrégation, et fournit en sortie le jeu de flux avec un résultat le plus élevé ou un résultat dépassant une valeur de seuil prédéterminée.

6. Dispositif selon la revendication 1, dans lequel l'unité d'agrégation de flux choisit une règle d'agrégation P dans pi*, où pi* est un jeu de règles d'agrégation, pour chaque P' dans le reste de pi*, ajoute P'', qui est une union de P et de P', dans pi*, dans le cas où P et P' ne sont pas en décomposition mutuelle l'un de l'autre et P" n'est pas dans pi* et un résultat de P'' est supérieur à un résultat de P et P', et enlève P de pi* dans le cas où pi* comporte une agrégation qui a un résultat supérieur à P.

7. Dispositif selon l'une quelconque des revendications 1 à 6, dans lequel l'unité de commande adaptative applique un retard supplémentaire à un temps de propagation aller-retour (RTT) d'un flux de surcharge.

8. Dispositif selon la revendication 1, dans lequel le réseau comprend un réseau OpenFlow.

9. Dispositif selon la revendication 8, dans lequel le dispositif comprend un dispositif mandataire disposé entre un commutateur et un dispositif de commande.

10. Procédé utilisé dans un réseau, le procédé comprenant :
surveiller un état de réseau et le recueil de statistiques pour des flux passant par le réseau ;
agréger des flux en grappes et l'identification de flux qui peuvent provoquer un problème de réseau ; et
réguler de façon adaptative le flux identifié selon une rétroaction de réseau ;
et **caractérisé en ce que** l'agrégation de flux comprend :
définir un résultat S(P) = max(F)-m-(F) = m-(F), où m- est un opérateur médian faible ;
découvrir une agrégation qui révèle un comportement de surcharge *P** = *maxps(P)*; et
définir un jeu de règles d'agrégation.

11. Procédé selon la revendication 10, dans lequel le procédé est utilisé dans un dispositif mandataire disposé entre un commutateur et un dispositif de commande.
